# EUROPÄISCHE PATENTSCHRIFT

(11) **EP 0 500 996 B1**
(45) Veröffentlichungstag und Bekanntmachung des Hinweises auf die Patenterteilung: **19.01.1994**
(21) Anmeldenummer: 91103099.7
(22) Anmeldetag: 01.03.1991
(51) Int. Cl.: H05G 1/60, H04N 5/321, A61B 6/06

(54) **Röntgendiagnostikeinrichtung mit einer Primärstrahlenblende**
X-ray diagnostic apparatus with a diaphragm for primary radiation
Appareil de radiodiagnostic comportant un diaphragme pour le rayonnement X primaire

(43) Veröffentlichungstag der Anmeldung: 02.09.1992
(73) Patentinhaber: SIEMENS AKTIENGESELLSCHAFT, 80333 München (DE)
(72) Erfinder: Haendle, Jörg, Dipl.-Ing., W-8520 Erlangen (DE)

(56) Entgegenhaltungen:
- EP-A- 0 114 369
- EP-A- 0 402 876
- DE-A- 3 141 987
- US-A- 4 360 731
- US-A- 4 473 843
- US-A- 4 831 260

## Beschreibung

Die Erfindung betrifft eine Röntgendiagnostikeinrichtung mit einer Primärstrahlenblende, die im Strahlengang einer Röntgenröhre angeordnet ist, und mit einer Bildverstärker-Fernsehkette, die einen Bildspeicher aufweist. Derartige Primärstrahlenblenden werden benutzt, um Teile des Strahlenbildes zur Reduktion der Streustrahlung und Reduzierung der Helligkeit auszublenden. Als Primärstrahlenblenden können Konturenblenden, halbtransparente Konturenblenden, Fingerblenden mit bestimmten, an das Objekt angepaßten Profilabsorptionen usw. Verwendung finden.

In der DE-C-1 800 879 ist eine derartige Primärstrahlenblende für Röntgenuntersuchungsgeräte beschrieben, die aus zwei halbtransparenten Blendenplatten besteht. Durch Bedienelemente lassen sich diese Blendenplatten im Durchleuchtungsbild verstellen, bis sie die gewünschte Stellung einnehmen. Dadurch werden aber die Untersuchungsperson sowie der Patient unerwünschten, zusätzlichen Strahlungen ausgesetzt, da die Justierung der Blende nicht zur eigentlichen Diagnose gehört.

Die Erfindung geht von der Aufgabe aus, eine Röntgendiagnostikeinrichtung der eingangs genannten Art zu schaffen, die es ermöglicht, eine optimale Einstellung der Blende ohne zusätzliche Strahlungsbelastung zu erreichen.

Die Aufgabe wird erfindungsgemäß dadurch gelöst, daß die Primärstrahlenblende mit Gebern versehen ist, die die Position der einzelnen Blendenteile der Primärstrahlenblende an eine an den Gebern und den Bildspeicher angeschlossene Verarbeitungsschaltung liefern, die derart ausgebildet ist, daß eine Beeinflussung der aus dem Bildspeicher entnommenen, den einzelnen Bildpunkten entsprechenden Signales derart erfolgt, daß die Wirkung der Primärstrahlenblende nachgebildet wird. Dadurch erhält man eine Simulation der Blende durch Transparenzausgleich im aus dem Bildspeicher ausgelesenen Bild mit Absorptionsanpassung.

Einen einfachen Aufbau erhält man, wenn die Verarbeitungsschaltung einen mit den Gebern verbundenen Steuerrechner und eine mit dem Bildspeicher verbundene Simulationsschaltung zur Nachbildung der Wirkung der Primärstrahlenblende aufweist. Der Steuerrechner ermittelt dabei die Stellung und die Koordinaten der einzelnen Blendenteile und bewirkt eine Abschwächung gemäß dem Schwächungsgrad der Primärstrahlenblende des in diesem Bereich liegenden Videosignales.

Es hat sich dabei als vorteilhaft erwiesen, wenn die Simulationsschaltung eine Schaltung zur Amplitudenanpassung des Videosignales aufweist, bei der die Absorptionsfaktoren der Primärstrahlenblende eine entsprechende Schwächung des Videosignales bewirken. Eine vollständige Ausblendung der durch die Blendenplatten der Primärstrahlenblende geschwächten Bildteile wird erreicht, wenn die Simulationsschaltung eine Austastschaltung aufweist, die eine Austastung des Videosignales bewirkt, das durch die Stellung der Primärstrahlenblende nicht dargestellt würde.

Der Absorptionseinfluß von halbtransparenten Blenden wird dadurch realisiert, daß die Simultionsschaltung an ihrem Eingang eine Logarithmierungsschaltung und an ihrem Ausgang eine Delogarithmierungsschaltung aufweist. Dadurch kann bei überlagerten Blendenlamellen eine genaue Amplitudenreduktion im Videosignalbereich durchgeführt werden.

Es hat sich als vorteilhaft erwiesen, wenn die Simulationsschaltung mit einer Additionsschaltung verbunden ist, der das von einer weiteren Austastschaltung gelieferte Signal überlagert wird, wenn die weitere Austastschaltung mit dem Bildspeicher und dem Steuerrechner verbunden ist, der der Kontur, Lage und/oder Transparenz der Primärstrahlenblende entsprechende Ausgangssignale erzeugt, die eine Austastung des gespeicherten Bildsignales bewirken. Dadurch kann erreicht werden, daß außerhalb des Bereiches der Primärstrahlenblende das Signal ungeschwächt durch die weitere Austastschaltung der Additionsschaltung zugeführt wird, während innerhalb des Bereiches der Primärstrahlenblende nur der Teil über die Simulationsschaltung der Additionsschaltung zugeführt wird.

Die Erfindung ist nachfolgend anhand eines in der Zeichnung dargestellten Ausführungsbeispieles näher erläutert. Es zeigen:
- FIG 1: ein erfindungsgemäße Röntgendiagnostikeinrichtung und
- FIG 2: die in FIG 1 dargestellte erfindungsgemäße Verarbeitungsschaltung

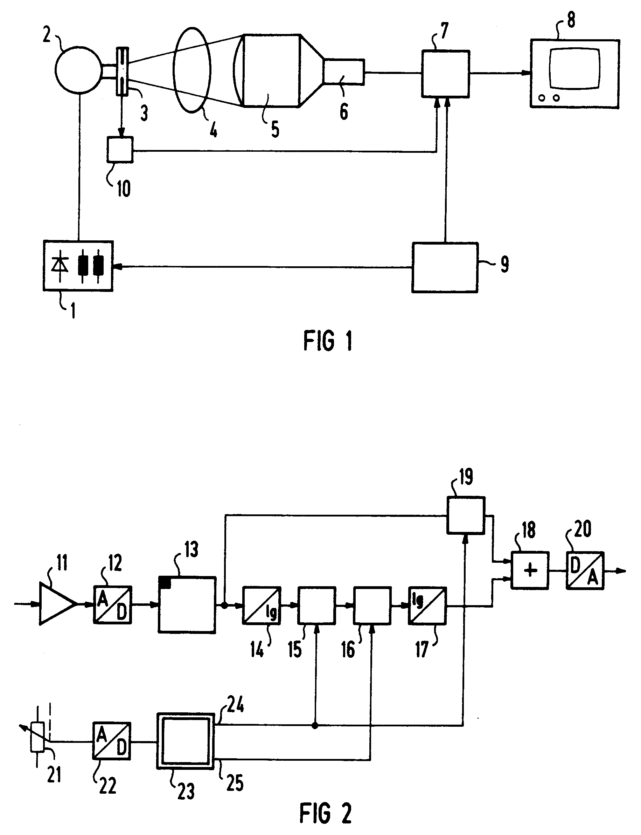

In der FIG 1 ist eine Röntgendiagnostikeinrichtung mit einem Röntgengenerator 1 dargestellt, der eine Röntgenröhre 2 mit einer Primärstrahlenblende 3 speist. Im durch die Primärstrahlenblende 3 begrenzten Strahlengang der Röntgenröhre 2 befindet sich ein Patient 4. Das durch den Patienten 4 durchgetretene, von der Röntgenröhre 2 erzeugte Strahlenbündel fällt auf das Eingangsfenster eines Röntgenbildverstärkers 5. Das auffallende Strahlenbild wird durch den Röntgenbildverstärker 5 verstärkt als sichtbares Bild auf seinem Ausgangsleuchtschirm wiedergegeben. Dieses Bild wird von der Fernsehkamera 6 über eine nicht dargestellte Optik erfaßt und in ein Videosignal umgewandelt. Die Fernsehkamera 6 ist über eine Verarbeitungsschaltung 7 mit einem Monitor 8 zur Wiedergabe des Videosignales verbunden. Eine Steuervorrichtung 9 bewirkt dabei den synchronen Ablauf der Röntgendiagnostikeinrichtung.

Erfindungsgemäß ist die Primärstrahlenblende 3 mit Gebern 10 verbunden, die die Position der Primärstrahlenblende 3 erfassen. Die Geber 10 sind mit der Verarbeitungsschaltung 7 verbunden, die aufgrund der Position, wie nachfolgend noch beschrieben, die Abschwächung des Strahlenbilder durch die Primärstrahlenblende 3 errechnet und entsprechend auf dem Monitor 8 beim wiedergegebenen Bild berücksichtigt.

In FIG 2 ist die Verarbeitungsschaltung 7 dargestellt. Das Ausgangssignal der Fernsehkamera 6 wird einem Videoverstärker 11 zugeführt, das in einem daran angeschlossenen Analog/Digital-Wandler (A/D-Wandler 12) digitalisiert und in einem Bildspeicher 13 eingelesen wird. Der Ausgang des Bildspeichers 13 ist mit einer Logarithmierungsschaltung 14 verbunden, an deren Ausgang eine erste Austaststufe 15 angeschlossen ist. An die erste Austaststufe 15 ist eine Schaltung 16 zur Amplitudenanpassung angeschlossen, die mit einer Delogarithmierungsschaltung 17 verbunden ist. Das Ausgangssignal des Bildspeichers 13 wird parallel einer zweiten Austaststufe 19 zugeführt und zusammen mit dem Ausgangssignal der Delogarithmierungsschaltung 17 in einer Additionsschaltung 18 überlagert, deren Ausgang mit einem Digital/Analog-Wandler (D/A-Wandler 20) verbunden ist. Dessen analoges Ausgangssignal wird auf dem Monitor 8 wiedergegeben.

An der Primärstrahlenblende 3 sind, wie aus FIG 1 zu entnehmen ist, Geber 10 angebracht, die die Stellung der einzelnen Blendenlamellen der Primärstrahlenblende 3 erfassen und an die Verarbeitungsschaltung 7 ein entsprechendes Signal liefern. Diese Geber 10 können beispielsweise aus Potentiometern 21 bestehen, deren analoge, der Stellung der Blendenlamellen der Primärstrahlenblende 3 proportionale Spannung einem A/D-Wandler 22 zugeführt wird, der mit einem Steuerrechner 23 verbunden ist. In dem Steuerrechner 23 sind Daten gespeichert, die dem jeweiligen Absorptionsgrad und der Form der einzelnen Lamellen der Primärstrahlenblende 3 entsprechen. Durch die von den Gebern 10 dem Steuerrechner 23 zugeführten Positionssignalen der Blendenlamellen ermittelt der Steuerrechner 23 daraus für jeden Bildpunkt, ob dieser Bildpunkt von einer Blendenlamelle abgedeckt wird und wie groß die Schwächung dieses Bildpunktes durch die Blendenlamelle sein würde.

Aufgrund dieser Berechnungen erzeugt der Steuerrechner 23 Austastsignale, die der Blendenkontur und Blendenlage entsprechen. Diese Austastsignale werden über einen ersten Ausgang 24 an die beiden Austastschaltungen 15 und 19 geliefert, die eine entsprechende Austastung bewirken. Weiterhin erzeugt der Steuerrechner 23 an seinen zweiten Ausgang 25 ein Signal, das dem Absorptionsfaktor der Blendenlamellen der Primärstrahlenblende 3 an dem entsprechenden Ort im Videosignal entspricht.

Den beiden Austastschaltungen 15 und 19 werden dabei inverse Signale zugeführt. Wird das durch die erste Austastschaltung 15 geführt Videosignal ausgetastet, so wird das durch die zweite Austastschaltung 19 geführte Videosignal der Additionsschaltung 18 zugeführt. Wird dagegen der Teil des Videosignales aus dem Bildspeicher 13 ausgelesen, der von einer der Blendenlamellen betroffen wäre, so wird das über die zweite Austastschaltung 19 geführte Videosignal ausgetastet, während die erste Austastschaltung 15 das Videosignal durchläßt, so daß es in der Schaltung 16 zur Amplitudenanpassung entsprechend dem Absorptionsfaktor der Blendenlamelle abgeschwächt werden kann.

Durch die Verwendung einer speziellen Tiefenblende als Primärstrahlenblende 3 an der Röntgenröhre 2 mit Lokalisationsgebern für die verschiedenen Blendenlamellen, Konturenblenden oder Fingerblenden erhält man ein Signal, das durch den Steuerrechner 23 in Austast- und Absorptionssignalen umgesetzt wird. Dabei können mehrere Blendenlamellen ganz oder teilweise mechanisch überlagert werden, so daß ein Absorptionsausgleich bei unterschiedlicher Objektdynamik möglich wird. Durch den Steuerrechner 23 und der Simulationsschaltung 14 bis 19 wird der Strahlenausgleich im Videosignal in Abhängigkeit von den eingefahrenen Blenden im gespeicherten Signal nachgebildet, so daß sämtliche Blendenmanipulationen im gespeicherten Videobild wirksam werden.

Von den Gebern 10 an der Primärstrahlenblende 3 werden die Koordinatensignale der Blendenstellung abgegeben. Über den Steuerrechner 23, in dem Blendendicke und Konturen abgespeichert sind, werden die Absorptionsfaktoren bzw. das ausgeblendete Feld für Einblendung bzw. zur Beeinflussung des Videosignales aufbereitet.

Durch Logarithmierung des Videosignales wird der Absorptionseinfluß der halbtransparenten Blenden realisiert. So wird beispielsweise nach Logarithmierung des Videosignales bei gleichen halbtransparenten Blendenlamellen, die überlagert werden, mit der gleichen Zahl von Faktoren die Amplitudenreduktion in dem Videosignalbereich durchgeführt, den die Blendenlamellen erfassen.

Durch diese erfindungsgemäße Ausbildung der Röntgeneinrichtung kann man ohne zusätzliche Strahlenbelastung die Primärstrahlenblende 3 nach einer erfolgten Übersichtsaufnahme in gewünschter Weise einstellen, so daß man anschließend sofort entweder eine Aufnahme oder Manipulationen am Patienten durchführen kann.

## Patentansprüche

1. Röntgendiagnostikeinrichtung mit einer Primärstrahlenblende (3), die im Strahlengang einer Röntgenröhre (2) angeordnet ist, und mit einer Bildverstärker-Fernsehkette (5 bis 8), die einen Bildspeicher (13) aufweist, **dadurch gekennzeichnet,** daß die Primärstrahlenblende (3) mit Gebern (10, 21) versehen ist, die die Position der einzelnen Blendenteile der Primärstrahlenblende (3) an eine an den Gebern (10, 21) und den Bildspeicher (13) angeschlossene Verarbeitungsschaltung (7) liefern, die derart ausgebildet ist, daß eine Beeinflussung der aus dem Bildspeicher (13) entnommenen, den einzelnen Bildpunkten entsprechenden Signale derart erfolgt, daß die Wirkung der Primärstrahlenblende (3) nachgebildet wird.

2. Röntgendiagnostikeinrichtung nach Anspruch 1, **dadurch** **gekennzeichnet**, daß die Verarbeitungsschaltung (7) einen Steuerrechner (23), der mit den Gebern (10, 21) verbunden ist, und eine mit dem Bildspeicher (13) verbundene Simulationsschaltung (14 bis 19) zur Nachbildung der Wirkung der Primärstrahlenblende (3) aufweist.

3. Röntgendiagnostikeinrichtung nach Anspruch 1 oder 2, **dadurch** **gekennzeichnet**, daß die Simulationsschaltung (14 bis 19) eine Schaltung (16) zur Amplitudenanpassung des Videosignales aufweist, bei der die Absorptionsfaktoren der Primärstrahlenblende (3) eine entsprechende Schwächung des Videosignales bewirken.

4. Röntgendiagnostikeinrichtung nach Anspruch 2 oder 3, **dadurch** **gekennzeichnet**, daß die Simulationsschaltung (14 bis 19) eine Austastschaltung (15) aufweist, die eine Austastung des Videosignales bewirkt, das durch die Stellung der Primärstrahlenblende (3) nicht dargestellt würde.

5. Röntgendiagnostikeinrichtung nach einem der Ansprüche 1 bis 4, **dadurch gekennzeichnet,** daß die Simulationsschaltung (14 bis 19) an ihrem Eingang eine Logarithmierungsschaltung (14) und an ihrem Ausgang eine Delogarithmierungsschaltung (17) aufweist.

6. Röntgendiagnostikeinrichtung nach einem der Ansprüche 1 bis 5, **dadurch gekennzeichnet,** daß die Simulationsschaltung (14 bis 19) mit einer Additionsschaltung (18) verbunden ist, der das von einer weiteren Austastschaltung (19) gelieferte Signal überlagert wird, daß die weitere Austastschaltung (19) mit dem Bildspeicher (13) und dem Steuerrechner (22) verbunden ist, der der Kontur, Lage und/oder Transparenz der Primärstrahlenblende (3) entsprechende Austastsignale erzeugt, die eine Austastung des gespeicherten Bildsignales bewirken.

## Claims

1. X-ray diagnostics device having a primary radiation diaphragm (3) which is disposed in the beam path of an X-ray tube (2), and having an image intensifier-video chain (5 to 8) which comprises an image memory (13), characterised in that the primary radiation diaphragm (3) is provided with sensors (10, 21) which supply the position of the individual diaphragm portions of the primary radiation diaphragm (3) to a processing circuit (7) and the image memory (13) connected to the sensors (10, 21), the circuit being constructed in such a way that signals taken from the image memory (13) and corresponding to the individual pixels are acted on in such a way that the effect of the primary radiation diaphragm (3) is simulated.

2. X-ray diagnostics device according to claim 1, characterised in that the processing circuit (7) comprises a control computer (23) which is connected to the sensors (10, 21), and a simulation circuit (14 to 19) connected to the image memory (13) for simulating the effects of the primary radiation diaphragm (3).

3. X-ray diagnostics device according to claim 1 or 2, characterised in that the simulation circuit (14 to 19) comprises a circuit (16) for amplitude-matching of the video signal in which the absorption factors of the primary radiation diaphragm (3) cause a corresponding attenuation of the video signal.

4. X-ray diagnostics device according to claim 2 or 3, characterised in that the simulation circuit (14 to 19) comprises a blanking circuit (15) which causes blanking of the video signal which would not be shown through the position of the primary radiation diaphragm (3).

5. X-ray diagnostics device according to one of claims 1 to 4, characterised in that the simulation circuit (14 to 19) has a logarithmizing circuit (14) at its input and a delogarithimizing circuit (17) at its output.

6. X-ray diagnostics device according to one of claims 1 to 5, characterised in that the simulation circuit (14 to 19) is connected to a summing circuit (18) on which the signal supplied from a further blanking circuit (19) is superimposed, in that the further blanking circuit (19) is connected to the image memory (13) and the control computer (22) which generates blanking signals corresponding to the contour, position and/or transparency of the primary radiation diaphragm (3), these blanking signals causing a blanking of the stored image signal.

## Revendications

1. Installation de radiodiagnostic comportant un diaphragme du rayonnement primaire (3), qui est disposé dans le trajet du rayonnement d'un tube à rayons X (2), et une chaîne de télévision à amplificateur de brillance (5 à 8), qui comporte une mémoire d'images (13), caractérisée par le fait que le diaphragme du rayonnement primaire (3) est muni de transmetteurs (10,21), qui fournissent la position des diverses parties du diaphragme du rayonnement primaire (3) à un circuit de traitement (7) relié aux transmetteurs (10,21) et à la mémoire d'images (13), et qui est constitué de sorte que les signaux, prélevés de la mémoire d'images (13) et correspondant aux points d'image, soient influencés de manière à simuler l'action du diaphragme (3) du rayonnement primaire.

2. Installation de radiodiagnostic suivant la revendication 1, caractérisée par le fait que le circuit de traitement (16) comporte un calculateur de commande (23), qui est relié aux transmetteurs (10,21), et un circuit de simulation (14 à 19), qui est relié à la mémoire d'images (13) et sert à simuler l'action du diaphragme du rayonnement primaire (3).

3. Installation de radiodiagnostic suivant la revendication 1 ou 2, caractérisée par le fait que le circuit de simulation (14 à 19) comporte un circuit (16) pour adapter l'amplitude du signal vidéo et dans lequel les facteurs d'absorption du diaphragme du rayonnement primaire (3) provoquent un affaiblissement correspondant du signal vidéo.

4. Installation de radiodiagnostic suivant la revendication 2 ou 3, caractérisée par le fait que le circuit de simulation (14 à 19) comporte un circuit de suppression (15), qui provoque une suppression du signal vidéo, qui ne serait pas représentée par la position du diaphragme du rayonnement primaire (3).

5. Installation de radiodiagnostic suivant l'une des revendications 1 à 4, caractérisée par le fait que le circuit de simulation (14 à 19) comporte, à son entrée, un circuit de mise sous forme logarithmique (14) et, à sa sortie, un circuit (17) de suppression de la forme logarithmique.

6. Installation de radiodiagnostic suivant l'une des revendications 1 à 5, caractérisée par le fait que le circuit de simulation (14 à 19) est relié à un circuit additionneur (18), auquel est superposé le signal, fourni par un autre circuit de suppression (19), que l'autre circuit de suppression (19) est relié à la mémoire d'images (13) et au calculateur de commande (22), lequel produit des signaux de suppression, correspondant au contour, à la position et/ou à la transparence du diaphragme du rayonnement primaire (3) et qui provoquent une suppression du signal d'image mémorisé.
